**Europäisches Patentamt**

(19) **European Patent Office**

**Office européen des brevets**

(11) Numéro de publication: **0 090 728**
**B1**

(12) **FASCICULE DE BREVET EUROPÉEN**

(45) Date de publication du fascicule du brevet: **24.09.86**

(51) Int. Cl.⁴: **H 04 B 17/02**

(21) Numéro de dépôt: **83400606.6**

(22) Date de dépôt: **23.03.83**

(54) Procédé pour transmettre un signal en code HDBN avec un signal binaire auxiliaire, codeur et décodeur selon le procédé et système de télésurveillance de répéteurs d'une liaison numérique au moyen de tels signaux auxiliaires.

(30) Priorité: **29.03.82 FR 8205327**

(43) Date de publication de la demande:
**05.10.83 Bulletin 83/40**

(45) Mention de la délivrance du brevet:
**24.09.86 Bulletin 86/39**

(84) Etats contractants désignés:
**CH DE GB IT LI**

(56) Documents cité:
**CH-A-608 151**

**NACHRICHTENTECHNISCHE ZEITSCHRIFT, vol. 33, no. 12, décembre 1980, pages 794-799, Berlin, DE. R.M. STACH et al.: "34-Mbit/s-Lichtwellenleiter-System"**
**THE POST OFFICE ELECTRICAL ENGINEERS JOURNAL, vol. 74, no. 4, janvier 1982, pages 335-344, Old Woking, Surrey, GB. T.C. WRIGHT et al.: "8.448 Mbit/s digital line systems on carrier cables"**

(73) Titulaire: **SOCIETE ANONYME DE TELECOMMUNICATIONS, 41, rue Cantagrel, F-75624 Paris Cedex 13 (FR)**

(72) Inventeur: **Beynie, Claude Paul Marcel, 30, rue du Bois des Moines, F-94210 La Varenne (FR)**

(74) Mandataire: **Martinet & Lapoux, 62, rue des Mathurins, F-75008 Paris (FR)**

EP 0 090 728 B1

## Description

La présente invention concerne un procédé pour transmettre un signal en code bipolaire à haute densité HDBn avec un signal binaire auxiliaire ayant un débit inférieur à celui du signal en code HDBn sur un même moyen de transmission, ledit signal en code HDBn comprenant quatre suites prédéterminées différentes ayant chacune $n+1$ éléments successifs dont les $n-1$ éléments centraux sont des zéros et dont le dernier élément est une marque de violation de bipolarité.

Elle a trait particulièrement à la mise en oeuvre d'un tel procédé dans un système de télésurveillance des paires bidirectionnelles de répéteurs d'une liaison de transmission numérique entre un équipement terminal surveillant et un équipement terminal distant.

La plupart des systèmes de télésurveillance actuels de répéteurs numériques font appel au mélange en fréquence du signal informatif dont le code en ligne est un code HDBn, et d'un ou plusieurs signaux de télélocalisation binaire qui modulent une sous-porteuse à basse-fréquence nettement inférieure à la fréquence du signal informatif. Les équipements terminaux et les répéteurs de ces systèmes comprennent pour chaque voie de la liaison des filtres séparateurs et mélangeurs des signaux auxiliaires de télélocalisation à basse-fréquence émis par l'équipement surveillant ou des signaux auxiliaires à basse-fréquence représentatifs des taux d'erreurs et émis par les répéteurs avec le signal informatif respectif. Ces filtres sont constitués par des transformateurs et selfs de chocs qui ont pour inconvénients d'être lourds et encombrants. En outre, l'utilisation de tels filtres ne permet pas des rapports élevés entre les débits des signaux informatifs et des signaux auxiliaires. Ceci a pour résultat d'empêcher toute télésurveillance de signaux numériques à débit très élevé par des signaux auxiliaires à basse-fréquence, ce débit élevé étant de plus en plus requis dans les artères de transmission entre des multiplexeurs-démultiplexeurs à nombreux étages.

La présente invention a pour but d'obvier aux inconvénients précédents et, notamment, de ne point faire appel à une fréquence porteuse pour transmettre les signaux auxiliaires et d'éviter tout encombrement spectral nuisible de la bande de base par les signaux auxiliaires.

A cette fin, le procédé est caractérisé en ce que, dans chacune des suites de $n+1$ éléments successifs du signal en code HDBn qui sont tramsmises pendant chaque élément du signal auxiliaire ayant un état binaire prédéterminé et qui sont identiques à une même suite prédéterminée à modifier, une marque bipolaire de ladite suite est permutée avec un zéro ayant un rang prédéterminé dans ladite suite en une suite modifiée.

La transmission du signal auxiliaire simultanée à celle du signal informatif en code HDBn est ainsi effectuée par une modification de certaines suites d'éléments du signal codé HDBn, sans que la parité de ce dernier ne soit modifiée, c'est-à-dire sans que le nombre de marques bipolaires $+$ et $-$ pendant une durée prédéterminée ne soit modifié.

A l'émission, un codeur pour obtenir des suites modifiées selon le procédé de l'invention est caractérisé selon le revendication 5.

A la réception, un décodeur de suites modifiées obtenues selon le procédé selon l'invention est caractérisé selon la revendication 6.

Comparativement au filtre mélangeur et au modulateur des systèmes connus précités, les codeur et décodeurs selon l'invention peuvent être intégrés et donc présenter un coût et un encombrement très réduit. En outre aucune limitation du rapport des débits du signal auxiliaire binaire et du signal informatif en code HDBn n'est requise.

Le procédé selon l'invention s'applique particulièrement à la télésurveillance des paires bidirectionnelles de répéteurs d'une liaison de la transmission numérique entre des équipements terminaux surveillant et distant. Un système de télésurveillance selon l'invention est caractérisé en ce que le signal de télélocalisation qui est transmis de l'équipement surveillant vers l'équipement distant pour interroger des moyens inclus dans les paires de répéteurs, et les signaux de réponse au signal de télélocalisation transmis par lesdits moyens inclus dans les paires de répéteurs vers l'équipement surveillant sont des signaux auxiliaires dont les bits audit état binaire prédéterminé modifient une ou plusieurs suites prédéterminées transmises dans les signaux en code HDBn respectifs délivrés par lesdits équipements terminaux.

D'autres avantages de la présente invention apparaîtront plus clairement à la lecture de la description suivante de plusieurs modes de réalisation en référence aux dessins annexés correspondants, dans lesquels:

- la Fig. 1 est un diagramme temporel montrant le codage HDB3 d'un signal binaire informatif et deux exemples des modifications de suites prédéterminées à $n+1 = 4$ éléments successifs du signal en code HDB3 par des éléments binaires à l'état "1" d'un signal binaire auxiliaire;

- la Fig. 2 est un diagramme temporel montrant la modification d'un signal HDB3 par un mot récurrent "10" d'un signal binaire auxiliaire;

- la Fig. 3 détaille un codeur selon l'invention;

- la Fig. 4 détaille un décodeur selon l'invention;

- la Fig. 5 est un bloc-diagramme schématique d'une liaison de transmission numérique connue;

- la Fig. 6 est un bloc-diagramme du circuit de télélocalisation d'une paire de répéteurs selon l'invention dans une liaison de transmission numérique; et

- la Fig. 7 est un bloc-diagramme d'un autre circuit de télélocalisation d'une paire de répéteurs selon l'invention dans une liaison de transmission numérique.

On rappelle d'abord les caractéristiques d'un code bipolaire à haute densité HDBn, pour lequel on pourra se référer par exemple à l'article de T.A. MOORE, paru dans "The Radio and Electronic Engineer", Vol. 44, No. 8, pages 421 à 427, Août 1974.

Un signal numérique en code HDBn est un signal bipolaire dans lequel un élément binaire zéro est codé comme un "0" et un élément binaire "1" est codé alternativement comme uné marque + ou -.

Dans le code HDBn, n est un entier prédéterminé et indique le nombre maximum de zéros successifs qui peuvent se trouver dans le signal bipolaire. Dans une suite de zéros successifs du signal binaire initial comprenant plus de (n + 1) zéros, chaque suite de (n + 1) zéros successifs est remplacée par l'une des quatre suites prédéterminées a, b, c, d qui peut être sous la forme de B0....0V ou 00.... 0V. La marque V est une marque qui viole la bipolarité, c'est-à-dire qui a la même polarité que la marque précédemment transmise; le signe de la marque V est l'opposé du signe de la dernière marque ayant violé la bipolarité. La marque B obéit à l'alternance de polarité: si la marque de bipolarité précèdant la suite et la marque de violation V de la suite ont le même signe, la marque B est un zéro, ce qui correspond à une suite b ou c; si la marque de bipolarité précèdant la suite et la marque de violation V de la suite ont des signes opposés, la marque B a le signe opposé à celui de la marque de bipolarité précédente, ce qui correspond à une suite a ou d. Le tableau I suivant donne la configuration des quatres suites prédéterminées en fonction de la marque qui précède immédiatement la suite de (n + 1) zéros successifs, et de la marque précédente ayant violé la bipolarité.

## TABLEAU I

| marque précédente | violation précédente | Suite prédéterminée modifiée correspondante à (n + 1) zéros. |
|---|---|---|
| + | + | a : $-$ 0 ... 0 $-$ |
| $-$ | + | b : 0 0 ... 0 $-$ |
| + | $-$ | c : 0 0 ... 0 + |
| $-$ | $-$ | d : + 0 ... 0 + |

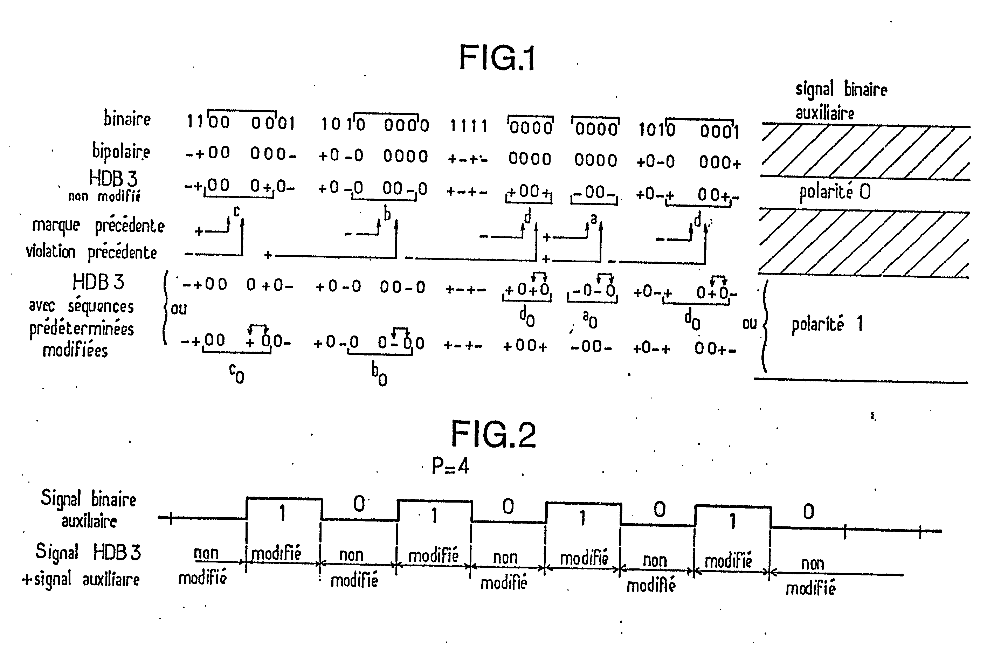

A titre d'exemple, les trois premières lignes de la Fig. 1 montrent respectivement un signal binaire, le signal bipolaire correspondant et le signal correspondant qui est codé en code HDB3 (n = 3). Les quatrième et cinquième lignes de la Fig. 1 indiquent la marque bipolaire précèdant chaque suite et la marque de violation précèdant chaque suite de(n + 1)zéros successifs dans le signal binaire ou bipolaire.

Selon l'invention, certaines suites prédéterminées du signal numérique informatif en code HDBn à transmettre sont modifiées en correspondance avec un état prédéterminé d'un signal binaire auxiliaire qui est également à transmettre sur le même moyen de transmission que celui du signal informatif en code HDBn d'un système de transmission numérique. Le signal binaire auxiliaire a un débit très inférieur à celui du signal informatif afin que, pendant la période élémentaire correspondant à un élément binaire du signal auxiliaire, un nombre statistiquement élevé de suites prédéterminées à modifier du signal informatif soient transmises. En d'autres termes, l'un des états binaires du signal auxiliaire est reconnu lorsque plusieurs suites prédéterminées du code HDBn sont présentes pendant la période élémentaire et sont modifiées de telle sorte qu'elles ne peuvent pas être présentes normalement dans le signal informatif, en l'absence de tout signal auxiliaire.

La convention suivante est adoptée. Les éléments binaires à l'état "0" du signal auxiliaire ne modifient pas le signal informatif et les éléments binaires à l'état prédéterminé "1" du signal auxiliaire modifient une ou plusieurs des quatre suites prédéterminées du code HDBn. Chaque suite à modifier a, b, c, d, est transformée en une suite $a_0$, $b_0$, $c_0$, $d_0$ qui résulte de la permutation d'un élément binaire zéro qui a un rang prédéterminé dans la suite, avec une marque bipolaire + ou - de la séquence prédéterminée a, b, c, d, ou qui résulte de deux telles permutations par rapport aux deux marques bipolaires lorsque celles-ci sont contenues dans la suite prédéterminée, telle que a ou d. Le tableau II suivant résume les différentes modifications possibles qui peuvent être apportées aux quatre suites predeterminées différentes du code HDBn.

## TABLEAU II

| Suite prédéterminée | | Suite modifiée | |
|---|---|---|---|
| | $a_0$ : | 0 0 ... 0$-$0.......... | 0 $-$ |
| a : $-$ 0 ... 0 $-$ | ou | 0 0 ... 0$-$0.. 0$-$0 .. | 0 0 |
| | ou | $-$ 0 ... 0$-$0.......... | 0 0 |
| b : 0 0 ... 0 $-$ | $b_0$ : | 0 0 ... 0$-$0.......... | 0 0 |
| c : 0 0 ... 0 + | $c_0$ : | 0 0 ... 0+0.......... | 0 0 |
| | $d_0$ : | 0 0 ... 0+0.......... | 0 + |
| d : $-$ 0 ... 0 + | ou | 0 0 ... 0+0.. 0+0 .. | 0 0 |
| | ou | + 0 ... 0+0.......... | 0 0 |

A titre d'exemple, on suppose que le code bipolaire du signal MIC informatif est le code HDB3 et que deux suites prédéterminées sont à modifier. Les deux suites prédéterminées peuvent être a et d, comme montré à la sixième ligne de la Fig. 1, ou peuvent être b et c, comme montré à la septième ligne de la Fig. 1. pour ces deux cas, il n'y a qu'une seule permutation et cette permutation est relative à la dernière marque + ou - dite de violation de bipolarité et au dernier zéro ayant le rang prédéterminé égal à trois dans la suite correspondante de(n + 1) = 4 zéros.

Les suites modifiées sont:
$a_0 = -$ 0 - 0 et $d_0 = +$ 0 + 0, ou $b_0 = $ 0 0 - 0 et

$c_0$ 0 0 + 0.

On notera que, de préférence, les deux suites à modifier sont les suites a et d, car, à la réception, le décodage des suites modifiées $b_0$ et $c_0$ nécessite une détection sur une suite de n+2, et non plus sur n+1 éléments bipolaires, la marque bipolaire précédant ladite suite devant être considérée.

Par exemple, si on considère le signal MIC informatif qui a un débit binaire de 2 048 kbit/s et qui résulte du multiplexage de trente-deux voies téléphoniques à 64 kbit/s, le signal numérique auxiliaire a un débit inférieur au kbit/s, par exemple égal à 200 bit/s.

Pendant la durée de chaque élément binaire du signal auxiliaire égale à $10^3 / 200 = 5$ ms, 2 048/0,2 = 10 240 éléments du signal informatif sont transmis. Dans un tel signal informatif, l'intervalle de temps statistique qui sépare deux viols de bipolarité utilisables, c'est-à-dire deux suites telles que a, d, ou b, c, correspond à trente-deux éléments binaires, soit 32 / (2 048 x $10^3$) = 15,625 µs. Le nombre moyen de suites prédéterminées modifiées pendant la durée d'un élément binaire à l'état "1" du signal auxiliaire est donc statistiquement égal à $5.10^3 / 15,625 = 320$. Ce nombre élevé permet d'éviter toute erreur dans le décodage du signal auxiliaire. Un décodeur selon l'invention valide un élément binaire "1" du signal auxiliaire, par exemple lorsqu'il a reconnu un nombre de suites modifiées compris entre 280 et 360 pendant une durée égale à 5ms.

Afin d'éviter toute erreur à la réception, lors de la reconstitution du signal auxiliaire, chaque mot binaire du signal auxiliaire est répété successivement par exemple P fois pour former une séquence auxiliaire, où P est un nombre entier supérieur à deux et en pratique de l'ordre de la dizaine. Dans la Fig. 2, on a supposé que le mot récurrent est composé de deux bits, tels que "1" et "00", et est répété 4 fois. A la réception, lorsque quatre mots successifs identiques "10" qui ont chacun une période de $2 \times 5 = 10$ms, ont été détectés par filtrage numérique, le mot auxiliaire tel que "10" est validé et est interprété en conséquence.

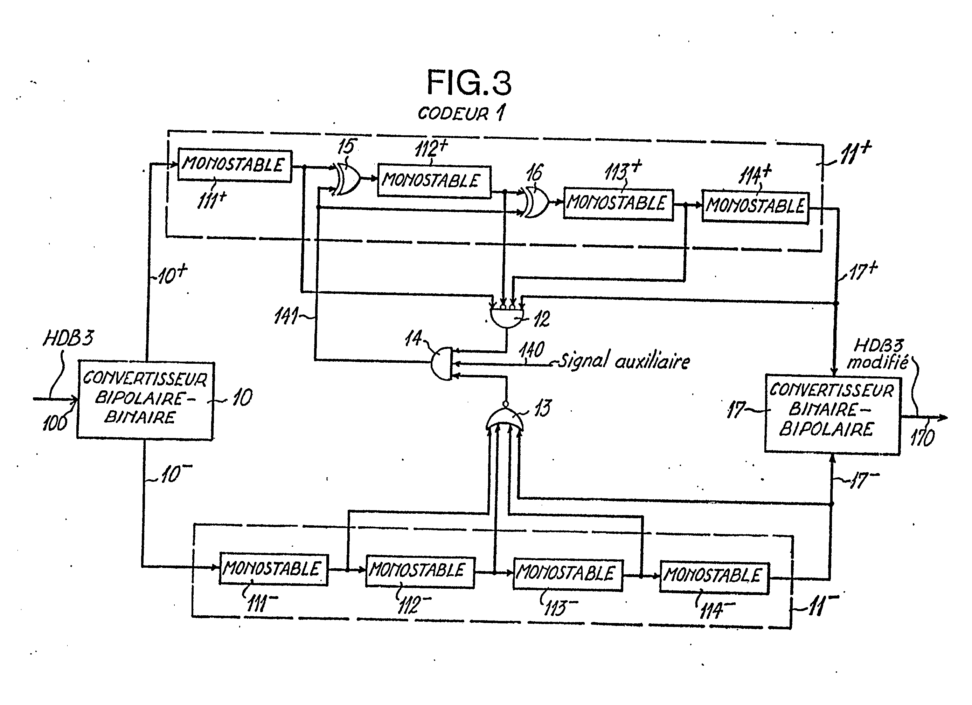

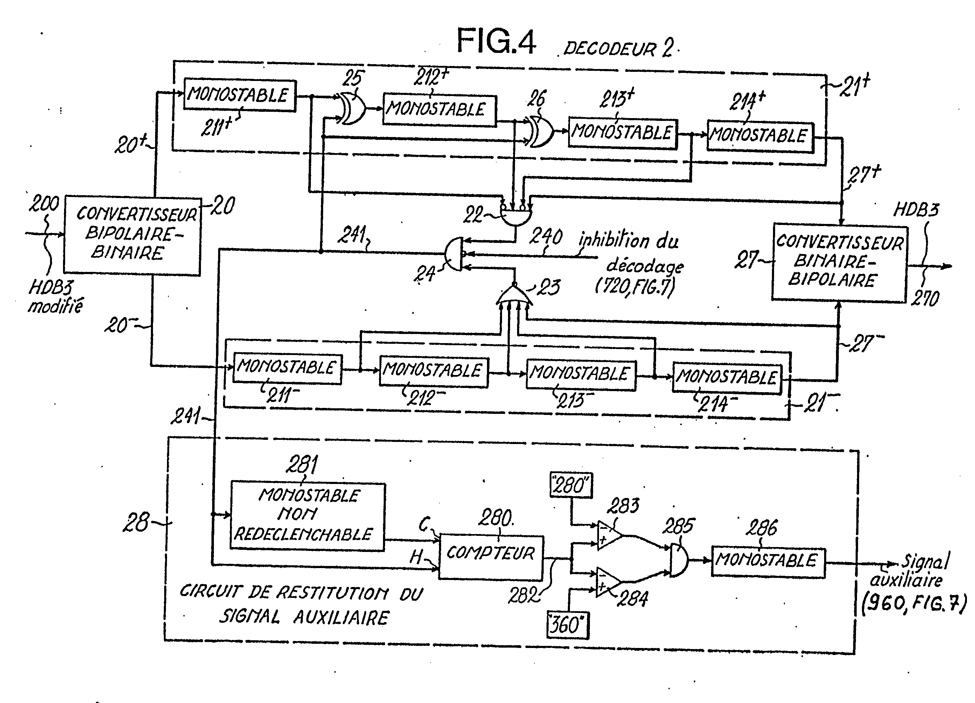

Les Figs. 3 et 4 montrent respectivement un codeur et un décodeur selon l'invention pour lesquels pendant la durée d'un élément binaire à l'état "1" du signal auxiliaire uniquement les suites d = + 0 0 + d'un signal informatif en code HDB3 sont modifiées en des suites $d_0 = 0 + 0 +$ ; selon cet exemple, la première marque de bipolarité de la suite d est permutée avec le zéro ayant le rang prédéterminé égal à deux dans la suite d.

Le codage et le décodage selon l'invention sont fondés sur le fait que pour détecter une suite telle que d ou $d_0$, la suite convertie en code binaire pour la même polarité que les marques qu'elle contient, correspond à une suite de zéros après conversion en code binaire pour une polarité opposée. Les codeur et décodeur doivent donc comprendre en entrée un convertisseur bipolaire-binaire classique qui convertit le signal reçu en code HDB3 en deux signaux binaires HDB3+ et HDB3- et en sortie un convertisseur binaire-bipolaire classique qui convertit les signaux binaires codés ou décodés HDB3+ et HDB3- en un signal en code HDB3. Le codage et le décodage sont réalisés au moyen de registres à décalage.

En se référant à la Fig. 3, le codeur 1 comprend un convertisseur bipolaire-binaire 10 dont l'entrée 100 reçoit le signal informatif en code HDB3. Le convertisseur 10 convertit le signal informatif en deux signaux binaires HDB3+ et HDB3- sur deux sorties 10+ et 10- Le signal HDB3+ comprend des bits "1" qui correspondent aux marques + du signal informatif et des bits "0" qui correspondent aux marques - et aux zéros du signal informatif. Le signal HDB3- comprend des bits "1" qui correspondent aux marques - du signal informatif et des bits "0" qui correspondent aux marques + et aux zéros du signal informatif.

A chaque sortie 10+, 10- du convertisseur 10 est relié un registre à décalage 11+, 11- à quatre étages composés chacun d'une bascule monostable 111+ à 114+, 111- à 114-.

Les sorties des bascules 111+ à 114+ sont reliées aux entrées d'une porte ET 12 qui a deux entrées inverseuses reliées aux sorties des seconde et troisième bascules 112+ et 113+ du registre 11+. La sortie de la porte 12 est à l'état "1" lorsque les sorties des bascules 111+ à 114+ sont respectivement aux états "1", "0", "0", "1". Le mot "1001" correspond à la conversion de la suite d = + 00 + en code binaire "positif" HDB3+.

Les sorties des bascules 111- à 114- du second registre 11- sont reliées aux entrées d'une porte NON-OU 13. La sortie de la porte 13 est à l'état "1" lorsque les sorties des bascules 111- à 114- sont toutes à l'état "0", ce qui correspond à la conversion de la suite d = + 00 + en code binaire "négatif" HDB3-.

Dans le codeur 1, une porte ET 14 a deux entrées qui sont reliées aux sorties des portes 12 et 13, et une entrée 140 qui reçoit le signal binaire auxiliaire. La sortie 141 de la porte 14 est à l'état "1" lorsqu'une suite d = + 00 + est détectée par les portes 12 et 13 et lorsque le signal auxiliaire est à l'état "1", la suite d devant alors être modifiée en la suite $d_0 = 0 + 0 +$. A cette fin, le premier registre 11+ comprend deux portes OU-EXCLUSIF 15 et 16 qui assurent la permutation de la première marque + et du premier zéro dans la suite d, ou plus précisément la transformation de la première marque susdite + en un zéro et du premier zéro susdit en une marque +. La porte 15 a une entrée qui est reliée à la sortie de la bascule 111+, et sa sortie qui est reliée à l'entrée de la bascule suivante 112+. La porte 16 a une entrée qui est reliée à la sortie de la bascule 112+, et sa sortie qui est reliée à l'entrée de la bascule 113+. L'autre entrée de chacune des portes OU-EXCLUSIF 15 et 16 est reliée à la sortie 141 de la porte ET 14. Tant que les suites "1001" et "0000" ne sont pas présentes dans les registres 11+ et 11-, le signal informatif n'est pas modifié, la sortie 141 de la porte ET 14 étant à l'état zéro et les portes 15 et 16 étant transparentes. Des que la sortie 141 de la porte 14 est à l'état "1", la porte 15 convertit le premier bit "1" qui correspond à la première marque + de la suite d, en un bit "0" et la porte 16 convertit le premier "0" de la suite d en un bit "1" qui correspond à la première marque + de la suite $d_0$. Les sorties de la porte 15, de la porte 16, de la bascule 113+ et de la bascule 114+ sont donc respectivement à "0","1", "0"et"1a correspond à la suite $d_0$ en code HDB3.

Les sorties des dernières bascules 114+, 114- des registres 11+, 11- sont reliées aux entrées 17+, 17- d'un convertisseur binaire-bipolaire 17 en sortie du codeur 1. Le convertisseur 17 effectue l'opération réciproque de celle effectuée par le convertisseur d'entrée 10. Par exemple, lorsque les entrées 17+ et 17- convoient les suites respectives 0101 et 0000, la sortie 170 délivre la suite $d_0 = 0 + 0 +$ en code HDB3 modifié.

Le décodeur 2 montré à la Fig. 4 a une structure analogue à celle du codeur 1. Le décodeur 2 comprend un convertisseur bipolaire-binaire 20 dont l'entrée 200 reçoit le signal informatif en code HDB3 modifié et dont les deux sorties 20+, 20- délivrent le signal informatif modifié en code binaire HDB3+ et HDB3-. Dans le décodeur 2 sont également prévus deux registres à décalage 21+, 21- qui comprennent chacun quatre bascules monostables 211+ à 214+, 211- à 214-. Les entrées des premières bascules 211+ et 211- sont reliées aux sorties respectives 20+ et 20- du convertisseur d'entrée 20.

Les sorties des bascules 211+ à 214+ sont reliées aux entrées d'une porte ET 22 qui a deux entrées inverseuses reliées aux sorties des première et troisième bascules 211+ et 213+ du registre 21+. La sortie de la porte 22 est à l'état "1" lorsque les sorties des bascules 211+ à 214+ sont respectivement aux états "0", "1", "0", "1". Le mot "0101" correspond à la suite $d = 0 + 0 +$ convertie en code HDB3+.

Les sorties des bascules 211- à 214- de l'autre registre 21- sont reliées aux entrées d'une porte NN-OU 23. La sortie de la porte 23 est à l'état "1" lorsque les sorties des bascules 211- à 214- sont toutes à l'état "0", ce qui correspond à la conversion, entre autres, de la suite $d_0 = 0 + 0 +$ en code binaire HDB3-.

Dans le décodeur 2, une porte ET 24 a deux entrées qui sont reliées aux sorties des portes 22 et 23. La sortie 241 de la porte 24 est à l'état "1" lorsqu'une suite $d_0 = 0 + 0 +$ est détectée par les portes 22 et 23 ce qui indique que le signal auxiliaire est à l'état "1". Cet état "1" du signal auxiliaire est validé ultérieurement lorsqu'un nombre de bits "1" successifs à la sortie de la porte 24 est compris entre 280 et 360 pendant une durée de 5ms comme déjà dit. La détection d'un bit "1" du signal auxiliaire peut être obtenue au moyen d'un circuit de restitution du signal auxiliaire tel que celui 28 montré à la Fig. 4.

Le circuit 28 comprend un compteur 280 et une bascule monostable non redéclenchable 281. L'entrée d'horloge H du compteur 280 et l'entrée de la bascule 281 sont reliées à la sortie 241 de la porte ET 24. La sortie de la bascule 281 délivre à l'entrée de comptage du compteur 280 une impulsion ayant une durée de 5ms en réponse à un bit "1" sur son entrée 241 quel que soit l'état ultérieur de son entrée pendant les 5 millisecondes suivantes. Dans ces conditions, le compteur 280 compte les suites $d_0$ pendant 5ms qui succèdent pratiquement au front montant d'un bit "1" du signal auxiliaire. A la fin des 5ms, le bus de sortie 282 du compteur 280 délivre le compte de suites $d_0$ détectées, c'est-à-dire de bits "1" sur la sortie 241 de la porte 24 pendant 5ms, à deux comparateurs numériques 283 et 284 qui comparent le compte respectivement à 280 et 360. Si le nombre de suites $d_0$ est compris entre 280 et 360, la sortie d'une porte ET 285 qui est reliée aux sorties des comparateurs 283 et 284 délivre un bit "1" qui à travers une bascule monostable 286 est converti en bit "1" du signal auxiliaire ayant une durée de 5ms.

En se reportant de nouveau au décodeur proprement dit, le premier registre 21+ comprend deux portes OU- EXCLUSIF 25 et 26 qui assurent la permutation du premier zéro et de la première marque + de la suite $d_0$. La porte 25 a une entrée qui est reliée à la sortie de la bascule 211+, et sa sortie qui est reliée a l'entrée de la bascule suivante 212+. La porte 26 a une entrée qui est reliée à la sortie de la bascule 212+, et sa sortie qui est reliée à l'entrée de la bascule 213+. L'autre entrée de chacune des portes OU-EXCLUSIF 25 et 26 est reliée à la sortie 241 de la porte ET 24. Tant que la sortie 241 de la porte 24 est à l'état "0", le signal informatif reçu à l'entrée 200 du décodeur n'est pas à modifier. En réponse à un bit "1" sur la sortie 241 de la porte 24, c'est-à-dire à des suites "0101" et "0000"aux sorties des bascules des registres 21+ et 21-, la porte 25 convertit le premier bit "0" de la suite $d_0$ en un bit "1" qui correspond à la première marque + de la suite d, et la porte 26 convertit le premier bit "1" qui correspond à la première marque + de la suite $d_0$, en un bit "0" qui correspond au premier bit "0" de la suite d. Les états des sorties de la porte 25, de la porte 26, de la bascule 213+ et de la bascule 214+ sont respectivement "1", "0", "0" et "1", ce qui correspond à la suite d en code HDB3+.

Le décodeur 2 comprend également en sortie un convertisseur binaire-bipolaire 27 dont les entrées 27+, 27- sont reliées aux sorties des dernières bascules 214+, 214- des registres 21+, 21-. Lorsque les entrées 27+ et 27- convoient les suites respectives "1001" et "0000", la sortie 270 du convertisseur 27 délivre la suite $d = + 00 +$ en code HDB3.

A partir des structures du codeur 1 et du décodeur 2 décrites précédemment, l'homme du métier peut concevoir aisément d'autres codeurs et décodeurs pour d'autres suites prédéterminées telles que a, b, c à modifier en un code HDBn quelconque. D'une manière générale, pour une suite prédéterminée ayant $(n+1)$ éléments en code HDBn, chacun des registres $11+$ et $11-$ du codeur et des registres $21+$ et $21-$ du décodeur comprend $n+1$ bascules monostables. Les deux registres affectés à la même polarité + ou - que celle de la ou des deux marques de la suite prédéterminée comprennent deux portes OU-EXCLUSIF qui sont insérées aux sorties des bascules ayant les mêmes rangs dans le registre que ceux du bit zéro et de la marque bipolaire à permuter dans la suite prédéterminée. Lorsque plusieurs suites telles que a, b, c, d, sont à modifier en réponse au bit à l'état prédéterminé du signal auxiliaire, plusieurs registres respectivement tels que $11+$, $11-$ dans le codeur et tels que $21+$, $21-$ dans le décodeur correspondent auxdites suites selon leurs modifications et sont connectés en série respectivement; les entrées 140 des portes 14 des paires de registres du codeur, telles que $11+$ et $11-$, reçoivent le signal auxiliaire et les sorties 241 des portes 24 des paires de registres du décodeur, telles que $21+$ et $21-$, sont reliées aux entrées d'une porte OU dont la sortie est reliée à l'entrée du circuit de restitution du signal auxiliaire tel que 28.

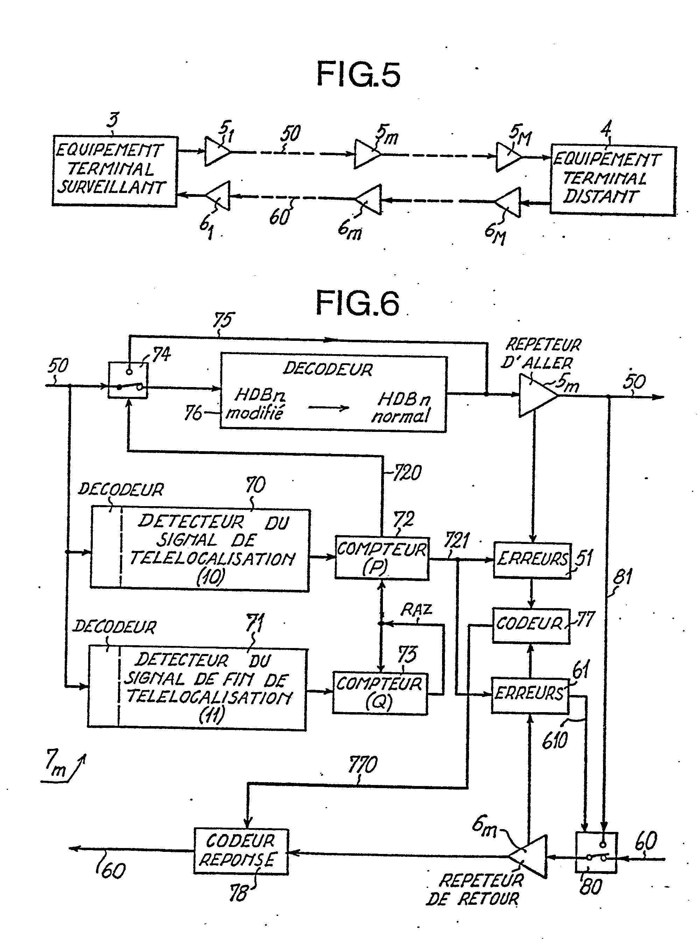

En se référant à la Fig. 5, on décrit une mise en oeuvre particulière du procédé selon l'invention qui a trait à la télésurveillance d'une liaison de transmission numérique bidirectionnelle entre un équipement terminal surveillant 3 et un équipement terminal distant 4. Entre les deux équipements, un signal numérique informatif est transmis suivant la direction d'aller, de l'équipement 3 vers l'équipement 4, à travers des répéteurs d'aller $5_1$ à $5_M$, et un autre signal numérique informatif est transmis selon la direction de retour, de l'équipement 4 vers l'équipement 3, à travers des répéteurs de retour $6_M$ à $6_1$. Le moyen de transmission suivant chacune des deux directions aller et retour est par exemple un câble coaxial 50, 60, bien qu'il puisse être une liaison hertzienne ou une ligne à fibre optique.

La télésurveillance des paires bidirectionnelles de répéteurs $5_1$ - $6_1$ à $5_M$ - $6_M$ consiste essentiellement en la transmission d'un signal auxiliaire dit de télélocalisation par l'équipement surveillant 3 sur la voie d'aller 50 et en la transmission sur la voie de retour 60 un signal auxiliaire dit de qualité à partir de chaque paire de répéteurs $5_1$ - $6_1$ à $5_M$ - $6_M$ vers l'équipement surveillant 3. En pratique, le signal de qualité indique les taux d'erreurs détectés dans les signaux numériques informatifs d'aller et de retour au niveau de chaque paire de répéteurs $5_1$ - $6_1$ à $5_M$ - $6_M$ en réponse à l'interrogation par le signal de télélocalisation détecté. La télésurveillance est effectuée pas-à-pas. pour que l'équipement surveillant 3 acquiert les taux d'erreurs de tous les répéteurs de la ligne, y compris ceux qui sont inclus dans les équipements 3 et 4, un cycle de télésurveillance et d'acquisition a une durée supérieure à la transmission d'aller et retour d'un élément binaire de signal auxiliaire dans la liaison de transmission 50 - 60.

Le cycle d'acquisition des taux d'erreurs des répéteurs d'aller et de retour de toutes les paires peut être analogue à celui décrit dans le EF-B-0018295. En se référant à ce brevet européen, l'impulsion de commande transmise suivant la direction d'aller et modulant une onde à basse fréquence est remplacée par une séquence auxiliaire de télélocalisation selon l'invention. Les mots binaires de supervision de qualité de transmission qui indiquent les taux d'erreurs des deux répéteurs de chaque paire par rapport à des plages de taux d'erreurs prédéterminées et qui modulent l'onde basse fréquence, sont remplacés par deux séquences auxiliaires de réponse selon l'invention. Les démodulateurs et modulateurs qui équipaient les répéteurs selon le EP-B-0018295 sont remplacés par des moyens pour détecter les mots récurrents, tels de "10", du signal auxiliaire de télélocalisation dans la voie numérique d'aller, et par des moyens pour introduire des mots binaires d'erreurs récurrents particuliers, tels que "11", "10" ou "01" de signal auxiliaire de réponse dans la voie numérique de retour. Par exemple, ces derniers trois mots d'erreurs indiquent que chaque répéreur a détecté pendant le cycle précédent de télélocalisation et d'acquisition un nombre d'erreurs dans le signal numérique respectif qui est inférieur à $2^3 - 1$, compris entre $2^3 - 1$ et $2^9 - 1$ ou supérieur à $2^9 - 1$.

Un autre procédé de télésurveillance de répéteurs est décrit maintenant en référence à la Fig. 6. Ce procédé permet de localiser individuellement chaque paire de répéteurs sans télélocaliser tous les répéteurs de la liaison de transmission numérique.

Chaque paire de répéteurs 5 - 6 est associée à un circuit de télélocalisation 7. Du côté de l'équipement surveillant 3, le circuit 7 comprend deux détecteurs 70 et 71 qui comprennent des décodeurs analogues à celui 2 de la Fig. 4 et qui décodent et valident respectivement un signal auxiliaire de télélocalisation et un signal auxiliaire dit de fin de télélocalisation transmis sur la voie d'aller 50. Le signal de télélocalisation est composé de séquences ayant chacune P mots binaires auxiliaires successifs tels que "10" selon l'invention. Le signal de fin de télélocalisation est composé d'une séquence ayant Q mots binaires auxiliaires successifs tels que "11" selon l'invention. Deux compteurs 72 et 73 comptent respectivement les P mots récurrents "10" et les Q mots récurrents "11". Le compteur 73 se remet à zéro automatiquement lorsque son compte atteint Q et commande simultanément la remise à zéro (RAZ) du compteur 72. Le compteur 72 a son compte bloqué à P après le comptage de P mots détectés "10".

Dans la voie d'aller 50 avant l'entrée du répéteur d'aller 5 est prévu un circuit ayant deux dérivations qui sont sélectionnées par un commutateur à deux positions 74 commandé par une sortie 720 du compteur 72. L'une 75 des dérivations est une petite section de ligne. L'autre dérivation comprend en série un décodeur 76 qui est analogue à celui 2 de la Fig.4 et qui ne comprend pas de préférence un circuit de restitution de signal auxiliaire. Le décodeur 76 convertit les suites prédéterminées modifiées, telles que $a_0$, $d_0$ selon l'invention en les suites normales telles que a, d du signal numérique informatif.

Le circuit de télélocalisation 7 comprend classiquement deux circuits de détection et comptage d'erreurs 51 et 61 qui détectent et comptent respectivement les erreurs dans les signaux numériques informatifs sur les voies d'aller et de retour, au n veau des répéteurs 5 et 6. Un codeur 77 reçoit les taux d'erreurs des circuits 51 et 61 et les code en mots binaires chaque fois que le compteur 72 a atteint le compte p, c'est-à-dire à chaque détection de p mots de télélocalisation "10" sur la voie d'aller. L'ordre de lecture des taux d'erreurs est délivré sur une liaison 721 par le compteur 72 vers les circuits 51 et 61. Le codage peut être analogue à celui selon le EP-B-0018295. Les deux mots binaires d'erreurs délivrés par le codeur 77 sont transmis en série sur un fil 770 à un second codeur 78. Le codeur 78 est analogue à celui 2 de le Fig.3 et introduit dans la voie de retour 60, en sortie du répéteur 6, les bits successifs des mots binaires d'erreurs en tant que signal auxiliaire de réponse selon l'invention. Ce dernier signal auxiliaire est composé d'une séquence de deux mots binaires qui sont respectivement identiques aux deux mots binaires d'erreurs.

En fonctionnement normal, c'est-à-dire en l'absence de toute télélocalisation et tant que le compte du compteur 72 est différent de P, la dérivation 75 est ouverte par le commutateur 74 et le décodeur 76 est traversé par le signal informatif en code HDBn. Lorsque l'on désire télélocaliser la paire de répéteurs $5_m$ - $6_m$, l'entier m étant compris entre 1 et M, l'équipement surveillant 3 transmet m séquences auxiliaires identiques de télélocalisation à P mots récurrents "10" chacune sur la voie d'aller 50. Dans le premier circuit de télélocslisation $7_1$, le détecteur 70 détecte d'abord la première séquence de mots "10", ce qui bloque le compteur correspondant 72 à P. La sortie 720 du compteur 72 passe à l'état "1" et commande le <u>commutateur</u> correspondant 74 afin que celui-ci relie la voie d'aller 50 à la dérivation respective 75. Ainsi, avant cette commutation, les suites prédéterminées dans les P premiers mots "10" sont corrigées dans le décodeur 76 qui redélivre vers les autres répéteurs $5_2$ à $5_M$ le signal informatif normal non modifié; les P premiers mots auxiliaires "10" n'ont donc aucun effet dans les autres circuits de télélocalisation $7_2$ à $7_M$. Par ailleurs, le passage à P du compte du compteur 72 du circuit de télélocalisation $7_1$ commande à travers la liaison 721 la lecture des comptes d'erreurs dans les circuits 51 et 61 du circuit de télélocalisation $7_1$,

puis leur codage dans les codeurs 77 et 78 du circuit de télélocalisation $7_1$ pour leur transmission sur la voie de retour 60 vers l'équipemenr surveillant 3.

Les opérations précédenres sont réitérées dans trous les circuits de télélocalisation suivants $7_2$ à $7_m$. Pour chaque répéteur $5_2$ a $5_m$, le décodeur respectif 76 ne corrige que les mots dé la première séquence auxiliaire de télélocalisation transmise par le répéteur précédent. L'équipement surveillant 3 reçoit ainsi à période constante les signaux auxiliaires d'erreurs des répéteurs $5_1$ - $6_1$ à $5_m$ - $6_m$, le dernier étant relatif aux répéteurs $5_m$ - $6_m$.

Après la réception de celui-ci, l'équipement surveillant 3 émet sur la voie d'aller 50 le signal dit de fin de télélocalisation à mots "11". Ce signal ordonne le retour en position normale de tous les circuits de télélocalisation $7_1$ à $7_m$. En effet, dans chacun des circuits $7_1$ à $7_m$, dès que le compteur 73 a compté Q mots "11" détectés par le détecteur 71, il commande sa remise à zéro ainsi que celle du compteur 72 et par suite le compteur 72 commande à travers la liaison 720 le commutateur 74 pour introduire de nouveau en série le décodeur 76 dans la voie d'aller 50.

Comme montré à la Fig.6, chaque circuit de télélocalisation 7 peut comprendre un autre commutateur 80 qui est commandé par une sortie 610 du circuit de détection et de comptage d'erreurs 61 associé à la voie de retour 60. En fonctionnement normal, le commutateur 80 ferme la voie de retour 60 ct ouvre un chemin de boucle 81 entre les voies d'aller 50 et de retour 60. Par contre, dès que le circuit 61 a détecté un taux d'erreurs élevé par exemple supérieur à $2^9$ ou une absence d'horloge dans le signal informatif de retour qui correspond souvent à une coupure franche de la liaison en amont, du côté de l'équipement distant 4, la sortie 610 du circuit 61 ordonne à travers le commutateur 80 l'ouverture de la voie de retour 60 en amont du répéteur de retour 6, et la fermeture du chemin unidirectionnel 81. Le signal informatif d'aller est ainsi bouclé à travers le chemin 81 et retransmis sur la voie de retour 60 vers l'équipement surveillant 3. Le chemin fermé 81 permet de retransmettre vers l'équipement 3 des signaux auxiliaires d'erreurs qui peuvent être composés de mots "10" et qui étaient destinés à télélocaliser les répéteurs succèdant au répéteur ou à la section de ligne de retour défaillant.

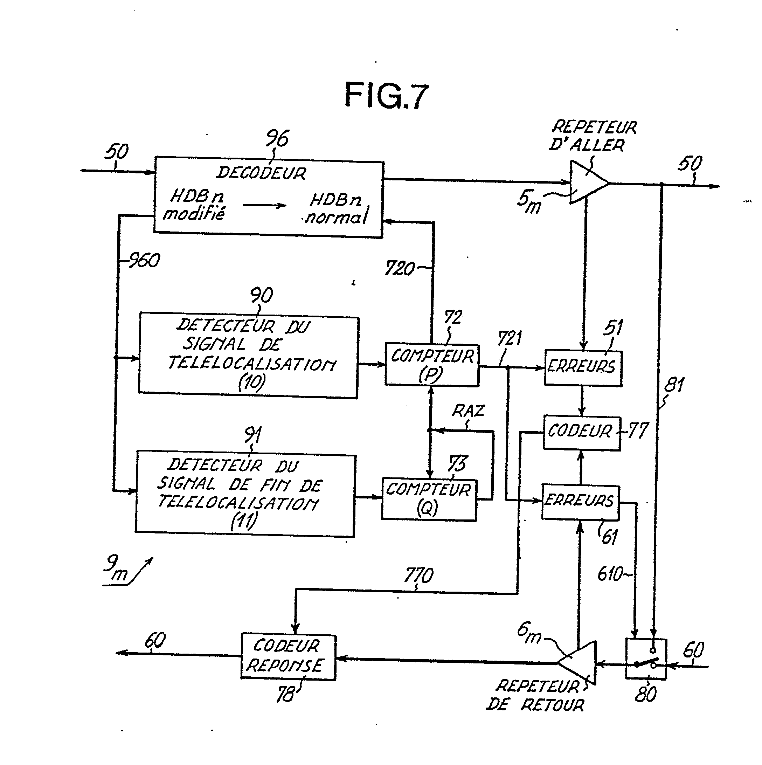

La Fig. 7 montre une autre réalisation d'un circuit de télélocalisation $9_m$ selon l'invention. Il comprend des circuits 51, 61, 72, 73, 77, 78 et 80 qui ont des structures et des agencements mutuels analogues à ceux correspondants dans le circuit de télélocalisation $7_m$ de la Fig. 6. Par rapport à ce dernier, les moyens de décodage à l'entrée du répéteur d'aller 5 sont modifiés en vue de diminuer le coût du circuit de télélocalisation. En effet, le circuit de télélocalisation $9_m$ ne comprend plus trois décodeurs tels que le décodeur 76 et ceux inclus dans les détecteurs 70 et 71, mais qu'un seul décodeur 96.

Le décodeur 96 est analogue à celui 2 de la Fig. 4. Il a l'entrée de son convertisseur bipolaire-binaire, tel que 20 de la Fig. 4, qui est reliée directement à la section précédente de la voie d'aller 50, et a la sortie de son convertisseur binaire-bipolaire, tel que 27 de la Fig. 4, qui est reliée à l'entrée numérique du répéteur d'aller $5_m$. La sortie 960 de la bascule monostable telle que 286, du circuit de restitution de signal auxiliaire, tel que 28 de la Fig. 4, qui est inclus dans le décodeur 96, est reliée aux entrées d'un détecteur du signal de télélocalisation 90 et d'un détecteur du signal de fin de télélocalisation 91. Les circuits 90 et 91 jouent des rôles identiques aux circuits 70 et 71 de la Fig. 6. Le circuit 90 fournit une impulsion d'horloge au compteur 72 en réponse à la détection d'un mot binaire auxiliaire tel que "10" selon l'invention qui est inclus dans la séquence de télélocalisation assignée à la paire de répéteurs $5_m$-$6_m$. Le circuit 91 fournit une impulsion d'horloge au compteur 73 en réponse à la détection d'un mot binaire tel que "11" selon l'invention qui est inclus dans le signal de fin de télélocalisation.

Comme déjà dit en référence à la Fig. 6, la sortie 720 du compteur 72 passe à l'état "1" dès que son compte a atteint P. Selon le mode de réalisation de la Fig. 7, la sortie 720 inhibe alors le décodage dans le décodeur 96 afin que les séquences de mots "10" destinés à la télélocalisation des paires de répéteurs suivantes ne soient pas décodés. En référence à la Fig. 4, la sortie 720 du compteur 72 est indiquée par une entrée inverseuse 240 de la porte ET 24. Ainsi dès que la paire de répéteurs en question est télélocalisée, suite au comptage de P mots "10" par le compteur 720, le fil 720 ouvre la ou les portes ET, telles que 24, dans le décodeur 96 qui devient transparent au signal informatif mélangé avec le signal auxiliaire et qui remplace la dérivation 75 du circuit de télélocalisation $7_m$ à la Fig. 6.

D'autres procédés de télélocalisation peuvent être encore envisagés par l'homme du métier à partir des exemples ci-dessus. Conjointement à la séquence de télélocalisation "10" peut être émise une séquence particulière pour interroger individuellement l'un des circuits de détection d'erreurs d'aller 51 et de retour 61. Lors de la retransmission des signaux auxiliaires de retour par le codeur 78 peut être délivré également un signal auxiliaire selon l'invention pour indiquer l'adresse de la paire de répéteurs.

**Revendications**

1 - Procédé pour transmettre un signal en code biopolaire à haute densité HDBn avec un signal binaire auxiliaire ayant un débit inférieur à celui du signal en code HDBn sur un même moyen de transmission (50 ou 60), ledit signal en code HDBn comprenant quatre suites prédéterminées différentes (a, b, c, d) ayant chacune n+1 éléments successifs dont les n-1 éléments centraux sont des zéros et dont le dernier élément est une marque de violation de bipolarité (+ ou -), caractérisé en ce que, dans chacune des suites de m+1 éléments successifs du signal en code HDBn qui sont transmises pendant chaque élément du signal auxiliaire ayant un état binaire prédéterminé ("1") et qui sont identiques à une même suite prédéterminée à modifier (d), une marque bipolaire (+) de ladite suite (d = +00+) est permutée avec un zéro ayant un rang prédéterminé (deux ou trois) dans ladite suite en une suite modifiée ($d_0 = 0 + 0 +$ ou $+ 0 + 0$).

2 - Procédé conforme à la revendication 1, caractérisé en ce que ladite permutation est également réalisée dans chacune des suites qui sont identiques à au moins une autre suite prédéterminée à modifier et qui sont transmises pendant chaque élément du signal auxiliaire audit état binaire prédéterminé ("1").

3 - Procédé conforme à la revendication 2, caractérisé en ce que les rangs des zéros permutés respectivement dans deux suites différentes (a, d) sont différents.

4 - Procédé conforme à l'une des revendications 1 à 3, caractérisé en ce que pour transmettre un mot binaire ("10" ou "11") du signal auxiliaire, ledit mot est répété successivement un nombre prédéterminé de fois (P ou Q).

5 - Codeur (1) pour obtenir des suites modifiées ($d_0$) selon le procédé conforme à la revendication 1, caractérisé en ce qu'il comprend des moyens d'entrée (10) pour convertir le signal en code HDBn (100) en un premier signal binaire (10+) ayant des bits "1" correspondant aux marques bipolaires dans le signal en code HDBn ayant la même polarité (+) que celle des marques bipolaires des suites à modifier (d = + 00 +) et en un second signal binaire (10) ayant des bits "1" correspondant aux autres marques bipolaires (-) du signal en code HDBn, des premier et second registres à décalage (11+, 11-) ayant chacun n+1 étages (111+ à 114+, 111- à 114-) et recevant respectivement les premier et second signaux binaires (10+, 10-), des moyens de sortie (17) pour convertir des signaux binaires (17+, 17-) délivrés par les derniers étages respectifs (114+, 114-) des premier et second registres à décalage (11+, 11-) en un signal en code HDBn (170) incluant des suites modifiées ($d_0$), en ce que le premier registre à décalage (11+) recevant le premier signal binaire (10+) comprend deux portes OU-EXCLUSIF (15, 16) qui sont insérées aux sorties de deux étages (111+, 112+) ayant des mêmes rangs dans ledit premier registre (11+) que ceux de la marque bipolaire (+) et du zéro à permuter dans ladite suite à modifier (d = +00+), et en ce que ledit codeur (1) comprend également des moyens (12) reliés aux sorties des étages du premier registre (11+) pour détecter un mot binaire ("1001") dont les bits "1" correspondent aux marques bipolaires d'une suite à modifier (d), des moyens (13) reliés aux sorties des étages du second registre (11⁻) pour détecter un mot binaire ("0000") dont tous les bits sont à l'état "0", et des moyens (14) recevant le signal auxiliaire pour produire un bit "1" aux autres entrées (141) des portes OU-EXCLUSIF (15, 16) en réponse aux deux mots binaires détectés simultanément ("1001", "0000") pendant chaque élément du signal auxiliaire ayant l'état binaire prédéterminé ("1").

6 - Décodeur de suites modifiées $(d_0)$ obtenues selon le procédé conforme à la revendication 1, caractérisé en ce qu'il comprend des moyens d'entrée (20) pour convertir le signal (200) en code HDBn modifié incluant des suites modifiées $(d_0)$ en un premier signal binaire (20+) ayant des bits "1" correspondant aux marques bipolaires du signal en code HDBn modifié ayant la même polarité (+) que celles des marques bipolaires des suites modifiées $(d_0 = 0+0+)$ et en un second signal binaire (20-) ayant des bits "1" correspondant aux autres marques bipolaires (-) du signal en code HDBn modifié, des premier et second registres à décalage (21+, 21-) ayant chacun n+1 étages (211+ à 214+,211- à 214-) et recevant respectivement les premier et second signaux binaires (20+, 20-), des moyens de sortie (27) pour convertir des signaux binaires (27+, 27-) délivrés par les derniers étages respectifs (214+, 214-) des premier et second registres à décalage (21+, 21-) en un signal en code HDBn incluant des suites non modifiées (d), en ce que le premier registre à décalage (21+) recevant le premier signal binaire (20+) comprend deux portes OU-EXCLUSIF (25, 26) qui sont insérées aux sorties de deux étages (211+, 212+) ayant des mêmes rangs dans ledit premier registre (21+) que ceux de la marque bipolaire (+) et du zéro à permuter dans ladite suite modifiée $(d = 0 + 0 +)$ et en ce que ledit décodeur (2) comprend également des moyens (22) reliés aux sorties des étages du premier registre (21+) pour détecter un mot binaire ("0101") dont les bits "1" correspondent aux marques bipolaires d'une suite modifiée $(d_0)$ des moyens (23) reliés aux sorties des étages du second registre (21) pour détecter un mot binaire ("0000") dont tous les bits sont à l'état "0", et des moyens (24) pour appliquer un bit "1" aux autres entrées (241) des portes OU-EXCLUSIF (25, 26) en réponse aux deux mots binaires détectés simultanément ("0101", "0000").

7- Decodeur conforme à la revendication 6, caractérisé en ce qu'il comprend des moyens (240, Fig. 4; 72, Fig. 6) pour inhiber l'application d'un bit "1" aux autres entrées (241) des portes OU-EXCLUSIF (25, 26) afin que les moyens de sortie de conversion- (27) retransmettent le signal en code HDBn incluant des suites modifiées $(d_0)$.

8 - Décodeur conforme à la revendication 6 ou 7, caractérisé en ce qu'il comprend des moyens (280, 281) pour compter les bits "1" appliqués aux autres entrées (241) des portes OU-EXCLUSIF (25, 26) pendant une durée égale à la largeur d'un élément binaire du signal auxiliaire et des moyens (283 à 286) pour comparer le nombre de bits "1" comptés pendant ladite durée avec un nombre prédéterminé (250) afin de produire un élément à l'état binaire prédéterminé ("1") du signal auxiliaire lorsque le compte de bits "1" est supérieur audit nombre prédéterminé.

9 - Système de surveillance des paires bidirectionnelles de répéteurs (5, 6) d'une liaison de transmission numérique bidirectionnelle (50, 60) entre un équipement terminal surveillant (3) et un équipement terminal distant (4) pour la mise en oeuvre du procédé conforme à l'une des revendications 1 à 4, caractérisé en ce que le signal de télélocalisation qui est transmis de l'équipement surveillant (3) vers l'équipement distant (4) pour interroger des moyens (7) inclus dans les paires de répéteurs (5, 6), et les signaux de réponse au signal de télélocalisation transmis par lesdits moyens (7) inclus dans les paires de répéteurs (5, 6) vers l'équipement surveillant (3) sont des signaux auxiliaires dont les bits audit état binaire prédéterminé modifient une une plusieurs suites prédérminées (a, b, c, d) transmises dans les signaux en code HDBn respectifs délivrés par lesdits équipements terminaux (3, 4).

10 - Système conforme à la revendication 9, dans lequel chaque paire de répéteurs (5, 6, 7) comprend des moyens (51, 61, 77) pour détecter et coder en binaire notamment les taux d'erreurs respectivement sur les deux voies (50, 60) de la liaison de transmission numérique, caractérisé en ce que chaque paire de répéteurs (5, 6, 7) comprend des moyens de détection (70, 72 ou 96, 90, 72) pour décoder le signal auxiliaire de télélocalisation et des moyens (78) pour coder les taux d'erreurs binaires en un signal auxiliaire transmis avec le signal en code HDBn vers l'équipement surveillant (3) en réponse à la détection du signal auxiliaire de télélocalisation.

11 - Système conforme à la revendication 10, caractérisé en ce que le signal auxiliaire de télélocalisation est composé de séquences de P mots binaires identiques successifs ("10") qui sont transmises en nombre égal au rang m de la dernière paire de répéteurs $(5_m, 6_m)$ à télélocaliser par l'équipement surveillant (3), en ce qu'un autre signal auxiliaire dit de fin de télélocalisation est composé de Q mots binaires identiques successifs ("11") et est transmis par l'équipement surveillant (3) après que celui-ci ait reçu des m paires de répéteurs $(5_1, 6_1, 5_m, 6_m)$ télélocalisées les taux d'erreurs respectifs, et en ce que chaque paire de répéteurs (5, 6) comprend des moyens (70, 72) de décodage et de comptage des P mots de la première séquence du signal de télélocalisation reçue pour commander la transmission des taux d'erreurs binaires par les moyens de codage (78) dès que le compte des moyens de décodage et de comptage est égal à P, des moyens de décodage (76) pour supprimer les permutations dans les suites modifiées du signal en code HDBn transmis par l'équipement surveillant (3) tant que le compte desdits moyens de décodage et de comptage n'a pas atteint P, des moyens (74, 75) pour court circuiter lesdits moyens de décodage (76) dès que le compte des moyens de décodage et de comptage (72) est égal à P afin de transmettre les autres séquences du signal de télélocalisation propres à télélocaliser les paires suivantes de répéteurs, et des moyens de décodage et de comptage (71, 73) des Q mots du signal de fin de télélocalisation pour remettre à zéro lesdits moyens de décodage et de comptage (72, 73) et en série les moyens de décodage (76) sur la voie transmettant le signal en code HDBn à partir de l'équipement surveillant (3) lorsque les Q mots ont été détectés.

12 - Système conforme à la revendication 10, caractérisé en ce que le signal auxiliaire de télélocalisation est composé de séquences de p mots binaires identiques successifs ("10") qui sont transmises en nombre égal au rang $m$ de la dernière paire de répéteurs ($5_m$, $6_m$) à télélocaliser pas l'équipement surveillant (3), en ce qu'un autre signal auxiliaire dit de fin de télélocalisation est composé de Q mots binaires identiques successifs ("11") et est transmis par l'équipement surveillant (3) après que celui-ci ait reçu des m paires dé répéteurs ($5_1$, $6_1$, $5_m$, $6_m$) télélocalisées les taux d'erreurs respectifs, et en ce que chaque paire de répéteurs (5, 6) comprend des moyens de décodage (96) pour supprimer les permutations dans les suites modifiées du signal en code HDBn transmis par l'équipement surveillant (3), des moyens (90, 72) reliés aux moyens de décodage (96) pour compter les P mots de la première séquence du signal dé télélocalisation reçue en vue de transmettre des taux d'erreurs binaires par les moyens de codage (78) et inhiber la suppression des permutations dans les moyens de décodage (96) dès que le compte desdits moyens de comptage (72) est égal à p, et des moyens (91, 73) reliés aux moyens de décodage (96) pour compter les Q mots du signal de fin de télélocalisation en vue de remettre à zéro lesdits moyens de comptage (72, 73) et recommander la suppression des permutations dans les moyens de décodage (96).

13 - Système conforme à l'une des revendications 10 à 12, dans lequel chaque paire de répéteurs (5, 6) comprend un chemin de dérivation (81) et des moyens de commutation (80) pour relier les deux voies (50, 60) à travers le chemin de dérivation, caractérisé en ce que les moyens de détection du taux d'erreurs (61) sur la voie (60) transmettant le signal en code HDBn délivré par l'équipement terminal distant (4) commandent les moyens de commutation (80) pour ouvrir ladite voie (60) en amont et pour relier les deux voies (50, 60) à travers le chemin de dérivation (81) en réponse à un taux d'erreurs supérieur à un taux prédéterminé ($2^9$) ou à une absence d'horloge dans le signal en code HDBn de ladite voie (60).

**Patentansprüche**

1. Verfahren zur Übertragung eines Signals im bipolaren Code von hoher Dichte HDBn mit einem binären Hilfsignal, das eine niedrigere Dichte hat als die des Signales im HDBn-Code, über das gleiche Übertragungsmittel (50 oder 60), wobei das Signal im HDBn-Code vier vorbestimmte unterschiedliche Folgen (a, b, c, d) enthält, deren jede n +1 aufeinanderfolgende Elemente aufweist, wovon die n - 1 mittleren Elemente Nullen sind und deren letztes Element eine Umschaltmarkierung für die Bipolarität (+ oder -) ist, dadurch gekennzeichnet, dan in jeder der Folgen von n + 1 aufeinanderfolgenden Elementen eines Signals im HDBn-Code, die während jedes Elementes des Hilfssignals in einem vorbestimmten Zustand ("1") übertragen werden und mit einer gleichen zur Modifizierung vorbestimmten Folge (d) übereinstimmen, eine bipolare Markierung (+) der besagten Folge (d = +00+) mit einer Null, welche eine vorbestimmte Stelle (zwei oder drei) innerhalb der besagten Folge hat, in einer modifizierten Folge ($d_0$ = 0+0+ oder +0+0) permutiert.

2. Verfahren nach Anspruch 1, dadurch gekennzeichnet, daß die besagte Permutation stets durchgeführt wird in jeder derjenigen Folgen, die identisch sind mit mindestens einer anderen der zur Modifizierung vorbestimmten Folgen und die während jedes Elementes des genannten Hilfssignales im vorbestimmten Binärzustand ("1") übertragen werden.

3. Verfahren nach Anspruch 2, dadurch gekennzeichnet, daß in zwei verschiedenen Folgen (a, d) die Stellen der permutierten Nullen verschieden sind.

4. Verfahren nach einem der Ansprüche 1 bis 3, dadurch gekennzeichnet, daß zur Übertragung eines binären Wortes ("10" oder "11" des Hilfssignales dieses Wort nacheinander eine vorbestimmte Anzahl von Malen (P oder Q) aufeinanderfolgend wiederholt wird.

5. Codierer (1) für die modizifierten Folgen ($d_0$) gemäß dem Verfahren nach Anspruch 1, gekennzeichnet durch
- Eingangsmittel (10) um das Signal im HDBn-Code (100) in ein erstes Binärsignal (10+) zu konvertieren, dessen Bits "1" den bipolaren Markierungen im Signal im HDBn-Code mit gleicher Polarität (+) wie die der bipolaren Markierungen der zu modifizierenden Folgen (d = +00+) entsprechen und in ein zweites Binärsignal (10) zu konvertieren, dessen Bits "1" den anderen bipolaren Markierungen (-) des Signals im HDBn-Code entsprechen,
- erste und zweiten Schieberegister (11+, 11-) von denen jedes n+1 Stufen (111+ bis 114+, 111- bis 114-) hat und die jeweils die ersten bzw. die zweiten Binärsignale (10+, 10-) empfangen,
- Ausgangsmittel (17) um die Binärsignale (17+, 17-), aus den jeweiligen letzten Stufen (114+, 114-) der ersten und zweiten Schieberegister (11+, 11-) in ein Signal im HDBn-Code (170) mit modifizierten Folgen ($d_0$) umzuformen,

- wobei das das erste Binärsignal (10+) empfangende Schieberegister zwei EXKLUSIV-ODER - Gatter (15, 16) enthält, die an die Ausgänge der beiden Stufen (111+, 112+) geschaltet sind, die gleiche Ränge im ersten Register (11+) besitzen, wie diejenigen der bipolaren Markierung (+) und der Null zur Permutation in der zu modifizierenden Folge (d = +00+),

- mit den Ausgängen der Stufen des ersten Registers (11+) verbundene Mittel (12) zur Feststellung eines Binärwortes ("1001"), dessen Bits "1" den bipolaren Markierungen einer zu modifizierenden Folge (d) entsprechen,

- mit den Ausgängen der Stufen des zweiten Registers (11-) verbundene Mittel (13) zur Feststellung eines Binärwortes ("0000") dessen Bits alle im Zustand "0" sind, sowie durch

- das Hilfssignal empfangende Mittel (14) zur Erzeugung eines Bits "1" für die anderen Eingänge (141) des EXKLUSIV-ODER-Gatters (15, 16) bei zwei Binärwörtern ("1001", "0000"), die, während jedes Element des Hilfssignales den vorbestimmten Binärzustand ("1") besitzt, gleichzeitig festgestellt sind.

6. Decodierer (2) für gemäß Verfahren nach Anspruch 1 modifizierte Folgen ($d_0$), gekennzeichnet durch

- Eingangsmittel (20) um das Signal (200), im modifizierten HDBn-Code, welches modifizierte Folgen ($d_0$) enthält, in ein erstes Binärsignal (20+) zu konvertieren, dessen Bits "1" den bipolaren Markierungen des Signals im modifizierten HDBn-Code entsprechen, welche die gleiche Polarität (+) aufweisen wie diejenigen der bipolaren Markierungen der modifizierten Folgen ($d_0 = 0+0+$), und in ein zweites Binärsignal (20-) zu konvertieren, dessen Bits "1" den anderen bipolaren Markierungen (-) des Signals im modifizierten HDBn-Code entsprechen,

- erste und zweite Schieberegister (21+, 21-), von denen jedes n+1 Stufen (211+ bis 214+, 211- bis 214-) hat und jeweils die ersten bzw. die zweiten Binärsignale (20+, 20-) empfängt,

- Ausgangsmittel (27) um die Binärsignale (27+, 27-) aus den jeweiligen letzten Stufen (214+, 214-) des ersten bzw. zweiten Schieberegister (21+, 21-) in ein Signal im HDBn-Code mit unmodifizierten Folgen (d) zu konvertieren wobei das erste Schieberegister (21+), welches das erste Binärsignal (20+) empfängt, zwei EXKLUSIV-ODER - Gatter (25, 26) enthält, welche an die Ausgänge der beiden Stufen (211+, 212+) geschaltet sind, welche die gleichen Stellen im ersten Register (21+) haben, wie die der bipolaren Markierung (+) und der zu permutierenden Null in der modifizierten Folge ($d_0 = 0+0+$),

- mit den Ausgängen der Stufen des ersten Registers (21+) verbundene Mittel (22) zur Feststellung eines Binärwortes ("0101"), dessen Bits "1" den bipolaren Markierungen einer modifizierten Folge ($d_0$) entsprechen,

- mit den Ausgängen der Stufen des zweiten Registers (21-) verbundene Mittel (23) zur Feststellung eines Binärwortes ("0000"), dessen Bits alle im Zustand "0" sind, sowie durch

- Mittel (24) um ein Bit "1" auf die anderen Eingänge (241) der EXKLUSIV-ODER-Gatter (25, 26) bei zwei gleichzeitig festgestellten Binärworten ("0101", "0000") zu geben.

7. Decodierer nach Anspruch 6, gekennzeichnet durch Mittel (240, Fig. 4; 72, Fig. 6) um die Abgabe eines Bits "1" an die anderen Eingänge (241) der EXKLUSIV-ODER-Gatter (25, 26) zu verhindern, damit die Mittel des Ausgangs der Konvertierung (27) das Signal im HDBn-Code zurücksenden, welches die modifizierten Folgen enthält ($d_0$).

8. Decodierer nach Anspruch 7 oder 8, gekennzeichnet durch Mittel (280, 281) zum Zählen der Bits "1" die während eines Zeitraumes, der gleich der Größe eines binären Elementes des Hilfssignales ist, an den anderen Eingängen (241) der EXKLUSIV-ODER-Gatter (25, 26) anliegen, sowie durch Mittel (283 - 286) zum Vergleich der Anzahl der Bits "1", welche während des genannten Zeitraumes gezählt sind, mit mindestens einer vorbestimmten Zahl (280), um ein Element im vorbestimmten Binärzustand ("1") des Hilfssignales zu erzeugen, wenn die Anzahl der Bits "1" größer ist als die vorbestimmte Zahl.

9. System zur Überwachung bidirektioneller Paare von Zwischenverstärkern (5, 6) bidirektionellen Datenübertragungsstrecke (50, 60) zwischen einem überwachenden Terminal (3) und einem entfernten Terminal (4) zur Durchführung des Verfahrens nach einem der Ansprüche 1 bis 4, dadurch gekennzeichnet, daß das Fernlokalisierungssignal, das vom überwachenden Terminal (3) an das entfernte Terminal (4) übermittelt wird, um die in den Zwischenverstärkerpaaren (5, 6) enthaltenen Mittel abzufragen, und die auf das Fernlokalisierungssignal durch die in den Zwischenverstärkerpaaren (5, 6) enthaltenen Mittel (7) zum überwachenden Terminal (3) übertragenen Antwortsignale Hilfssignale sind, deren Bits im beschriebenen vorbestimmten Binärzustand eine oder mehrere vorbestimmte Folgen (a, b, c, d) modifizieren, die im HDBn-Code in den Signalen übertragen werden, die von den genannten Terminals (3, 4) ausgegeben werden.

10. System nach Anspruch 9 bei dem jedes Paar von Zwischenverstärkern (5, 6, 7) Mittel (51, 61, 77) zur Feststellung und Binärkodierung insbesondere der Fehlerrate in jedem der beiden Wege (50, 60) der Datenübertragungsstrecke enthält, dadurch gekennzeichnet, daß jedes Paar von Zwischenverstärkern (5, 6, 7) Mittel zur Feststellung (70, 72 oder 96, 90, 72) enthält, um das Hilfssignal zur Fernlokalisierung zu decodieren, sowie Mittel (78) zur Kodierung der Rate der binären Fehler in einem Hilfssignal enthält, das zusammen mit einem Signal im HDBn-Code zum überwachenden Terminal (3) auf die Feststellung eines Hilfssignales zur Fernlokalisierung übertragen wird.

11. System nach Anspruch 10, dadurch gekennzeichnet, daß

- das Hilfssignal zur Fernlokalisierung aus einer Folge von P identischen aufeinanderfolgenden Binärwörtern ("10") besteht, welche in der gleichen Anzahl übertragen werden, die der Stelle m des letzten vom überwachenden Terminal (3) zu telelokalisierenden Zwischenverstärkerpaares ($5_m$, $6_m$) entspricht,

- daß ein weiteres Hilfssignal, welches das Ende der Fernlokalisierung bezeichnet, aus Q identischen aufeinanderfolgenden Binärwörtern ("11" besteht und vom überwachenden Terminal (3) übertragen wird, nachdem dieses von m telelokalisierten Zwischenverstarkerpaaren ($5_1$, $6_1$; $5_m$, $6_m$) die jeweiligen Fehlerraten empfangen hat,

- daß jedes Zwischenverstarkerpaar (5, 6) Mittel (70, 72) enthält zum Decodieren und Zählen von P Wörtern der ersten empfangenen Folge des Fernlokalisierungssignals, um die Übertragung der Rate der binären Fehler durch die Mittel zum Codieren (78) zu steuern, sobald die Zählung der Mittel zum Decodieren und zum Zählen gleich P ist, sowie Mittel enthält zum Decodieren (76), um die Permutationen innerhalb der modifizierten Folgen des im HDBn-Code vom überwachenden Terminal (3) übertragenen Signals zu unterdrücken, solange die Zählung der Mittel zum Decodieren und Zählen P nicht errreicht hat, ferner Mittel (74, 75) enthält, um die Mittel (76) zum Decodieren zu überbrücken, sobald die Zählung der Mittel zum Decodieren und Zählen (72) P ist, um die übrigen Folgen des Fernlokalisierungssignals zu übertragen, welche zur Fernlokalisierung der nachfolgenden Zwischenverstärkerpaare dienen, und sowie Mittel enthält zum Decodieren und Zählen (71, 73) von Q Wörtern des Signals Ende der Fernlokalisierung, um die Mittel zum Decodieren und Zählen (72, 73) und danach die Mittel zum Decodieren (76) auf Null zurückzustellen auf der Leitung, die das vom überwachenden Terminal (3) ausgehende Signal im HDBn-Code überträgt, bis Q Wörter festgestellt worden sind.

12. System nach Anspruch 10, dadurch gekennzeichnet, daß

- das Hilfssignal zur Fernlokalisierung aus einer Folge von P identischen aufeinanderfolgenden Binärwörtern ("10") besteht, welche in der gleichen Anzahl übertragen werden, die der Stelle m des letzten vom überwachenden Terminal (3) zu telelokalisierenden Zwischenverstärkerpaares ($5_m$, $6_m$) entspricht,

- daß ein weiteres Hilfssignal, das das Ende der Fernlokalisierung bezeichnet, aus Q identischen aufeinanderfolgenden Binärwörtern ("11") besteht und vom überwachenden Terminal (3) übertragen wird, nachdem dieses von m telelokalisierten Zwischenverstärkerpaaren ($5_1$, $6_1$; $5_m$, $6_m$) die jeweiligen Fehlerraten empfangen hat,

- daß jedes Zwischenverstärkerpaar (5, 6) Mittel enthält zum Decodieren (96), um die Permutationen innerhalb der modifizierten Folgen des im HDBn-Code vom überwachenden Terminal (3) übertragenen Signals zu unterdrücken, sowie mit den Mitteln zum Decodieren (96) verknüpfte Mittel (90, 72) enthält, um die P Wörter der ersten empfangenen Folge des Fernlokalisierungssignals zu zahlen zum Zwecke der Übertragung der Rate der binären Fehler durch die Codierungsmittel (75) und zum Hemmen der Ünterdrückung der Permutation in den Mitteln zur Decodierung (96), sobald die Zählung der Mittel zum Zählen gleich P ist, ferner mit den Mitteln zum Decodieren (96) verknüpfte Mittel (91, 73) enthält, um die Q Worte des Signals am Ende der Fernlokalisierung zu Zählen, um die Mittel zum Zählen (72, 73) auf Null zurückzustellen und in den Mitteln zur Decodierung (96) die Unterdrückung der Permutationen wieder durchzuführen.

13. System nach einem der Ansprüche 10 bis 12 in dem jedes Paar von Zwischenverstärkern (5, 6) eine Zweigleitung (81) und Schaltmittel (80) aufweist um die beiden Leitungen (50, 60) über die Zweigleitung miteinander quer zu verbinden, dadurch gekennzeichnet, daß die zum Feststellen der Fehlerrate in der Leitung (60) dienenden Mittel (61), welche das vom entfernten Terminal (4) gelieferte Signal im HDBn-Code übertragen, die Schaltmittel (80) steuern, um die Leitung (60) eingangsseitig zu öffnen und die beiden Leitungen (50, 60) über die Zweigleitung (81) miteinander quer zu verbinden, wenn die Fehlerrate größer als eine vorbestimmte Rate ($2^9$) ist oder wenn im HDBn-Codesignal von Leitung (60) der Zeitimpuls fehlt.

**Claims**

1 - Process for transmitting a signal in high-density bipolar HDBn code combined with an auxiliary binary signal having a rate lower than that of the HDBn code signal in a same digital transmission medium (50 or 60), said HDBn code signal comprising four different predetermined sequences (a, b, c, d) each having $n+1$ successive elements whose n-1 central elements are zeros and whose last element is a bipolarity violation mark (+ or -), characterized in that in each of sequences of $n+1$ successive elements in the HDBn code signal that are transmitted during each element of the auxiliary signal having a predetermined binary state ("1") and that are identical to a same predetermined sequence (d) to be modified, a bipolar mark (+) of said sequence (d = +00+) is permuted with a zero having a predetermined rank (two or three) in said sequence into a modified sequence ($d_0$, 0+0+ or +0+0).

2 - Process according to claim 1, characterized in that said permutation is also performed in each of sequences that are identical to at least another predetermined sequence to be modified and that are transmitted during each element of the auxiltary signal having said predetermined binary state ("1").

3 - Process according to claim 2, characterized in that the ranks of the zeros respectively permuted in two different sequences (a, d) are different.

4 - Process according to one of claims 1 or 3, characterized in that, in order to transmit a binary word ("10 or "11") of the auxiliary signal, said word is successively repeated a predetermined number of times (P or Q).

5 - Encoder (1) for obtaining modified sequences $(d_0)$ according to the process according to claim 1, characterized in that it comprises input means (10) for converting the HDBn code signal (100) into a first binary signal (10+) including "1" bits corresponding to bipolar marks in the HDBn code signal having the same bipolary (+) as that of the bipolar marks in the sequences to be modified (d = +00+) and into a second binary signal (10-) including "1" bit corresponding to the other bipolar marks (-) in the HDBn code signal, first and second shift registers (11+, 11-) each having n+1 stages (111+ to 114+, 111- to 114-) and respectively receiving the first and second binary signals (10+, 10-), output means (17) for converting binary signals (17+, 17-) delivered from the respective last stages (114+, 114-) of the first and second shift registers (11+, 11-) into an HDBn code signal including modified sequences $(d_0)$, in that the first shift register (11+) receiving the first binary signal (10+) comprises two OR-EXCLUSIVE gates (15, 16) that are inserted at the outputs from two stages (111+, 112-) having same ranks in said first register (11+) as those of the bipolar mark (+) and the zero element to be permuted in said sequence to modified (d = +00+), and in that said encoder (1) comprises means (12) connected to the ouputs from the first register (11+) stages for detecting a binary word ("1001") having "1" bits corresponding to the bipolar marks in a sequence to be modified (d), means (13) connected to the outputs from the second register (11-) stages for detecting a binary words ("0000") having all the bits in the "0" state, and means (14) receiving the auxiliary signal for producing a "1" bit at the other inputs (141) of the OR-EXCLUSIVE gates (15, 16) responsive to the two binary words detected simultaneously ("1001", "0000") during each auxiliary signal element having the predetermined binary state ("1").

6 - Decoder (2) for modified sequences $(d_0)$ obtained according to the process according to claim 1, characterized in that comprises input means (10) for converting the modified code HDBn signal (200) including modified sequences $(d_0)$ into a first binary signal (20+) including "1" bits corresponding to the bipolar marks in the modified code HDBn signal having the same polarity (+) as that of the bipolar marks in the modified sequences $(d_0 = 0+0+)$ and into a second binary signal (20-) including "1" bits corresponding to the other bipolar marks (-) in the modified code HDBn signal, first and second shift registers (21+, 21-) having each n+1 stages (211+ to 214+, 211- to 214-) and respectively receiving the first and second binary signals (20+, 20-), output means (27) for converting binary signals (27+, 27-) delivered from the respective last stages (214-, 214-) of the first and second registers (21+ 21-) into an HDBn code signal including unmodified sequences (d), in that the first shift register (21+) receiving the first binary signal (20+) comprises two OR-EXCLUSIVES gates (25, 26) that are inserted at the outputs from two stages (211+, 212+) having same ranks in said first register (21+) as those of the bipolar mark (+) and the zero element to be permuted in said modified sequence $(d_0 = 0+0+)$, and in that said decoder (2) comprises further means (22) connected to the outputs from the first register (21+) stages for detecting a binary word ("0101") having "1" bits corresponding to the bipolar marks in a modified sequence $(d_0)$, means (23) connected to the outputs from the second register (21-) stages for detecting a binary word ("0000") having all the bits in the "0" state, and means (24) for applying a "1" bit to other inputs (241) of the OR-EXCLUSIVE gates (25, 26) responsive to the two binary words detected simultaneously ("0101", "0000").

7 - Decoder according to claim 6, characterized in that it comprises means (240, Fig. 4; 72, Fig. 6) for inhibiting the application of an "1" bit to the other inputs (241) of the OR-EXCLUSIVE gates (25, 26) so that the converting output means (27 retransmits the code HDBn signal including modified sequences $(d_0)$.

8 - Decoder according to claim 6 or 7, characterized in that it comprises means (280, 281) for counting the "1" bits applied to the other inputs (241) of the OR-EXCLUSIVE gates (25, 26) during a period equal to the width of one auxiliary signal binary element and means (283 to 286) for comparing the number of "1" bits counted during said period with at least a predetermined number (280) whereby produce one auxiliary signal element having the predetermined binary state ("1") when the count of "1" bits is more than said predetermined number.

9 - System for monitoring bidirectional repeater pairs (5, 6) in a bidirectional digital transmission link (50, 60) between a monitoring end equipment (3) and a remote end equipment (4), designed for carrying out the process according to one of claims 1 to 4, characterized in that the remote locate signal that is transmitted from the monitoring equipment (3) to the remote equipment (4), to interrogate means (7) included in the repeater pairs (5, 6), and the signal responsing to remote locate signals transmitted from said means (7) included in the repeater pairs (5, 6) to the monitoring equipment (3) are auxiliary signals whose bits having said predetermined binary state modify one or several predetermined sequences (a, b, c, d) transmitted in the respective HDBn code signals delivered from said end equipments (3, 4).

10 - System according to claim 9, in which each repeater pairs (5, 6, 7) comprises means (51, 61, 77) for detecting and binary encoding particularly the error rates in the two channels (50, 60) of the digital transmission link respectively, characterized in that each repeater pairs (5, 6, 7) comprises detecting means (70, 72 or 96, 90, 72) for decoding the auxiliary remote locate signal and means (78) for encoding the binary error rates into an auxiliary signal transmitted together with the HDBn code signal to the monitoring equipment (3) in response to the auxiliary remote locate signal being detected.

11 - System according to claim 10, characterized in that the auxiliary remote locate signal consists of sequences of P successive identical binary words ("10") that are transmitted in numbers equal to the rank m of the last repeater pair ($5_m$, $6_m$) to be remote located by the monitoring equipment (3), in that another auxiliary so-called end-of-remote-locating aignal consists of Q successive identical binary words ("11") and is tranmsitted from the monitoring equipment (3) after this equipment has received the respective error rates from the m remote located repeater pairs ($5_1$, $6_1$, 5m, 6m), and in that each repeater pair (5, 6) comprises means (70, 72) for decoding and counting P words in the first remote locate signal sequence received to control the transmission of the binary error rates by the encoding means (78) once the count in the decoding and counting means is equal to P, decoding means (76) for eliminating any permutations in the modified sequences of the HDBn code signal transmitted by the monitoring equipment (3) until such time as the count in said decoding and counting means has reached P, means (74, 75) for short-circuiting said decoding means (76) once the count in the decoding and counting means (72) is equal to P in order to transmit the other sequences in the remote-locate signal that are intended for remote-locating the following repeater pairs, and means (71, 73) for decoding and counting Q words in the end-of-remote-locating signal to reset said decoding and counting means (72, 73) to zero and to insert the decoding means (76) in series in the path transmitting the HDBn code signal from the monitoring equipment (3) when the Q words have been detected.

12 - System according to claim 10, characterized in that the auxiliary remote-locate signal is composed oi sequences of P auccessive identical binary words ("10") that are transmitted in numbers equal to the rank m of the last repeater pair (5m, 6m) to be remote located by the monitoring equipment (3), in that another auxiliary so-called end-of-remote-locating signal is composed of Q successive identical binary words ("11") and is transmitted from the monitoring equipment (3) after this equipment has received the respective error rates from the m remote located repeaters pairs ($5_1$, $6_1$, $5_m$, $6_m$) and in that each repeater pair (5, 6) comprises decoding means (96) for eliminating any permutations in the modified sequences of the HDBn code signal transmitted by the monitoring equipment (3), means (90, 72) connected to the decoding means (96) for counting the P words in the first remote locate signal sequence received with a view to transmitting binary error rates from the coding means (78) and to inhibiting the elimination of permutations in the decoding means (96) once the count in said counting means (72) is equal to P, and means (91, 73) connected to the decoding means (96) for counting the Q words of the end-of-remote-locating signal with a view to resetting said counting means (72, 73) to zero and to recontrolling the elimination of any permutations in the decoding means (96).

13 - System according to one of claims 10 to 12 in which each repeater pair (5, 6) comprises a loop-back path (81) and switching means (80) for connecting the two channels across the loop-back path, characterized in that the error rate detecting means (61) in the channel (60) transmitting the HDBn code signal delivered from the remote end equipment (4) controls the switching means (80) to open said channel (60) upstream and to close the two channels (50, 60) across the loop-back path (81) in response to an error rate more than a predetermined rate ($2^9$) or to a clock absence in the HDBn code signal of said channel (60).

# FIG.1

0 090 728

| | | | | | | | | | signal binaire auxiliaire |
|---|---|---|---|---|---|---|---|---|---|
| binaire | 11 00 | 00 01 | 10 10 | 000 0 | 1111 | 0000 | 0000 | 10 10 | 000 1 |
| bipolaire | -+00 | 000- | +0-0 | 0000 | +-+- | 0000 | 0000 | +0-0 | 000+ |
| HDB 3 non modifié | -+00 | 0+,0- | +0-0 | 00-0 | +-+- | +00+ | -00- | +0-+ | 00+- |

polarité 0

marque précédente   +⌐ᶜ      ⌐ᵇ      ⌐ᵈ  +⌐ᵃ      ⌐ᵈ
violation précédente   -      +      -  +      -

HDB 3 avec séquences prédéterminées modifiées

{
-+00   0+0-   +0-0   00-0   +-+-   +0+0   -0-0   +0-+   0+0-
ou                                     $d_0$    $a_0$           $d_0$
-+00   +0,0-   +0-0   0-0,0   +-+-   +00+   -00-   +0-+   00+-
      $c_0$           $b_0$
}

ou { polarité 1

# FIG.2

P = 4

| Signal binaire auxiliaire | | 1 | 0 | 1 | 0 | 1 | 0 | 1 | 0 |
|---|---|---|---|---|---|---|---|---|---|
| Signal HDB 3 +signal auxiliaire | non modifié | modifié | non modifié | modifié | non modifié | modifié | non modifié | modifié | non modifié |

# FIG.3

## CODEUR 1

HDB3

CONVERTISSEUR BIPOLAIRE- BINAIRE 10

100

MONOSTABLE 111⁺

10⁺

15

MONOSTABLE 112⁺

16

MONOSTABLE 113⁺

MONOSTABLE 114⁺

11⁺

141

12

17⁺

14

140 Signal auxiliaire

10⁻

13

HDB3 modifié

CONVERTISSEUR BINAIRE- BIPOLAIRE

17

170

17⁻

MONOSTABLE 111⁻

MONOSTABLE 112⁻

MONOSTABLE 113⁻

MONOSTABLE 114⁻

11⁻

3

0 090 728

FIG.4  *DECODEUR 2*

CONVERTISSEUR BIPOLAIRE-BINAIRE — 20

MONOSTABLE 211⁺ · 25 · MONOSTABLE 212⁺ · 26 · MONOSTABLE 213⁺ · MONOSTABLE 214⁺ · 21⁺

CONVERTISSEUR BINAIRE-BIPOLAIRE 27 — 270 — HDB3

MONOSTABLE 211⁻ · MONOSTABLE 212⁻ · MONOSTABLE 213⁻ · MONOSTABLE 214⁻ · 21⁻ · 27⁻

240 *inhibition du décodage (720,FIG.7)*

CIRCUIT DE RESTITUTION DU SIGNAL AUXILIAIRE

MONOSTABLE NON REDECLENCHABLE 281 · COMPTEUR 280 · "280" · 283 · 285 · MONOSTABLE 286 · 282 · 284 · "360" · 28

*Signal auxiliaire (960,FIG.7)*

HDB3 modifié · 200 · 20⁺ · 20⁻ · 241 · 22 · 24 · 23

0 090 728

# FIG.5

# FIG.6

# FIG.7